# FASCICULE DE BREVET EUROPEEN

(11) **EP 0 880 444 B1**
(45) Date de publication et mention de la délivrance du brevet: **12.07.2000**
(21) Numéro de dépôt: 97914355.9
(22) Date de dépôt: 05.03.1997
(51) Int. Cl.: B60P 3/025, B60P 3/34

(54) **PLATE-FORME REPLIABLE ET UNITE MOBILE AINSI EQUIPEE**
ZUSAMMENFALTBARE PLATTFORM UND DAMIT AUSGERÜSTETE MOBILE EINHEIT
FOLDING PLATFORM AND VEHICLE PROVIDED THEREWITH

(30) Priorité: 05.03.1996 FR 9602724
(43) Date de publication de la demande: 02.12.1998
(73) Titulaire: TOUTENKAMION, 45270 Ladon (FR)
(72) Inventeur: PETITIMBERT, Patrice, F-45270 Saint-Maurice-sur-Fessard (FR)
(74) Mandataire: Pontet, Bernard
(86) Numéro de dépôt international: FR9700384
(87) Numéro de publication internationale: WO9732747

(56) Documents cités:
- FR-A- 1 068 990
- FR-A- 1 129 556
- FR-A- 1 157 924
- GB-A- 2 256 373
- US-A- 3 234 696
- US-A- 3 271 065
- PATENT ABSTRACTS OF JAPAN vol. 8, no. 140 (M-305) [1577] , 29 Juin 1984 & JP 59 038145 A (KOIZUMI), 1 Mars 1984,

## Description

La présente invention concerne une plate-forme repliable, notamment à usage de plancher, selon les caractéristiques du préambule de la revendication indépendante 1.

La présente invention concerne également une unité mobile, telle que véhicule terrestre, notamment routier, ou abri véhiculable, qui est équipée d'une telle plate-forme, que l'on met à l'état replié pour le transport et à l'état déployé pour l'utilisation lorsque l'unité mobile est stationnaire.

Certaines plates-formes repliables connues comportent une base qui constitue une partie de la plate-forme à l'état déployé et qui reste immobile lors de la transformation faisant passer la plate-forme de l'état replié à l'état déployé et inversement. Dans la suite on appellera "largeur" toute dimension mesurée parallèlement à la direction selon laquelle la plate-forme s'agrandit lors de son déploiement. On appellera "rapport d'extension" le rapport entre la largeur de la plate-forme à l'état déployé et la largeur de la base.

Selon le US-A-3 234 696, la base est munie de supports télescopiques guidés parallèlement à son propre plan. En outre, une succession de panneaux articulés en accordéon est reliée par une extrémité à l'un des bords longitudinaux de la base et par son autre extrémité à l'extrémité libre des supports télescopiques. Ainsi, pour déployer la plate-forme, un même mouvement fait passer les supports télescopiques de l'état rétracté à l'état d'extension et la succession de panneaux articulés d'un état escamoté dans un plan vertical à un état déployé dans le plan horizontal de la base. Les panneaux articulés reposent alors sur les supports télescopiques formant poutre porteuse.

Selon le US-A-3 271 065, les supports, au lieu d'être télescopiques, sont des poutres parallèles à la base, articulées à la base entre une position rabattue sous la base et une position où ces poutres font saillie latéralement par rapport à la base pour soutenir les panneaux articulés lorsque ceux-ci sont en position déployée.

Ces structures connues présentent des inconvénients. On cherche à rendre le rapport d'extension aussi grand que possible pour réaliser une plate-forme aussi grande que possible tout en limitant son encombrement à l'état replié. Ceci rend très délicate la réalisation des supports escamotables qui doivent par exemple, selon le US-A-3234696, être réalisés à nombreux étages télescopiques. L'ensemble est coûteux tout en ayant une rigidité médiocre à l'état déployé.

Le but de l'invention est de remédier à ces inconvénients en proposant une plate-forme repliable présentant pour un coût raisonnable une très bonne rigidité à l'état déployé même avec un rapport d'extension particulièrement grand.

Suivant un premier aspect de l'invention, la plate-forme repliable comprenant, conformément au US-A-3 234 696 ou au US-A-3 271 065: une base disposée sensiblement horizontalement en service; au moins un ensemble mobile comprenant un premier plateau relié à la base par une articulation et un deuxième plateau relié de manière mobile au premier plateau, l'ensemble mobile pouvant par l'articulation du premier plateau avec la base et par mouvement relatif des deux plateaux, se transformer entre un état escamoté, et un état déployé dans lequel le premier et le deuxième plateau sont alignés avec la base; et des moyens de soutien pour soutenir le deuxième plateau dans le plan de la base lorsque l'ensemble mobile est à l'état déployé, est caractérisée, par rapport au US-A-3 234 696 ou au US-A-3 271 065, en ce que le premier plateau comprend des moyens pour, sensiblement indépendamment de la base, supporter les moyens de soutien dans une position de soutien dans laquelle les moyens de soutien sont positionnés sensiblement parallèlement au plan du premier plateau et sont capables de soutenir le deuxième plateau en une position déployée de celui-ci.

Ainsi, selon l'invention, c'est un premier plateau, articulé à la base, qui supporte au moins partiellement les moyens de soutien, eux-mêmes capables de soutenir au moins un deuxième plateau se situant encore plus loin de la base lorsque la plate-forme est déployée.

On obtient ainsi des avantages très significatifs. Pour un rapport d'extension donné, les moyens de soutien peuvent être beaucoup plus simples car ils n'assurent plus qu'une partie de l'extension de la plate-forme. Par exemple, si les moyens de soutien sont de type télescopique, des moyens télescopiques à un seul ou à deux étages peuvent suffire là où trois ou quatre étages auraient été nécessaires selon l'état de la technique.

En outre, dans la plupart des applications, et notamment celles montées sur véhicules routiers et abris véhiculables, le premier plateau peut se placer verticalement lorsque la plate-forme est repliée. La largeur du premier plateau se trouve alors dans le sens de la hauteur. Or, la hauteur disponible, par exemple dans un véhicule routier, est généralement supérieure à la largeur intérieure. Ainsi, le premier plateau articulé à la base peut avoir une plus grande largeur que la base elle-même. Il est donc plus facile d'associer les moyens de soutien escamotables au premier plateau qu'à la base. Par exemple, si les moyens de soutien sont télescopiques, chaque étage des moyens télescopiques peut être mieux guidé et/ou avoir une plus grande course.

Pour réaliser une plate-forme techniquement moins sophistiquée, donc moins coûteuse et plus légère, il est également prévu selon l'invention de réaliser les moyens de soutien sous la forme d'une structure conçue pour être installée en appui à la fois sur le premier plateau et sur le sol, après que le premier plateau a été placé en alignement avec la base.

Suivant un second aspect de l'invention, l'unité mobile telle que véhicule terrestre ou abri véhiculable, comprenant une plate-forme mobile selon le premier aspect, est caractérisée en ce qu'à l'état escamoté l'ensemble mobile s'étend sensiblement perpendiculairement à la base le long d'un flanc de l'unité mobile.

D'autres particularités et avantages de l'invention ressortiront encore de la description ci-après, relative à deux exemples non-limitatifs.

Aux dessins annexés dans lesquels les figures 1 à 4 se rapportent à un premier mode de réalisation et les figures 5 à 10 se rapportent à un deuxième mode de réalisation:
- la figure 1 est une vue en coupe transversale d'un véhicule terrestre selon l'invention, la plate-forme étant à l'état replié dans la moitié droite de la figure et à l'état intermédiaire dans la moitié gauche de la figure;
- la figure 2 est une vue semblable à la figure 1 mais partielle et montrant la plate-forme dans son mouvement de l'état intermédiaire à l'état déployé;
- la figure 3 est une vue analogue à la figure 1 mais montrant seulement la moitié gauche du véhicule lorsque le véhicule est en configuration d'utilisation fixe avec la plate-forme à l'état déployé;
- la figure 4 est une vue schématique, à échelle agrandie, de l'articulation entre le premier plateau et un panneau intermédiaire du deuxième plateau.
- la figure 5 est une vue en bout d'un abri véhiculable muni d'un second mode de réalisation de la plate-forme repliable en cours de déploiement, montrant le passage de la position repliée à la position intermédiaire;
- la figure 6 est une vue analogue à la figure 5, montrant l'état intermédiaire;
- les figures 7, 8, 9 sont des vues analogues aux figures 5 et 6, montrant trois phases successives du passage entre la position intermédiaire et la position déployée de la plate-forme; et
- la figure 10 est une vue de côté du premier plateau, montrant l'extrémité distale de celui-ci et les logements des moyens de soutien.

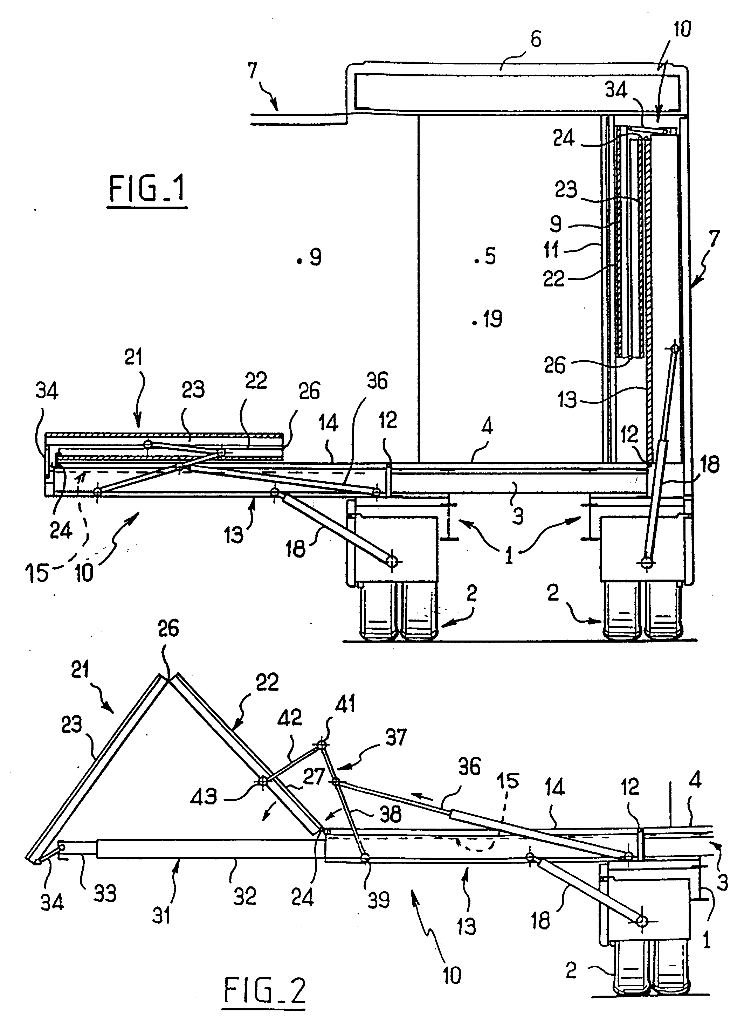

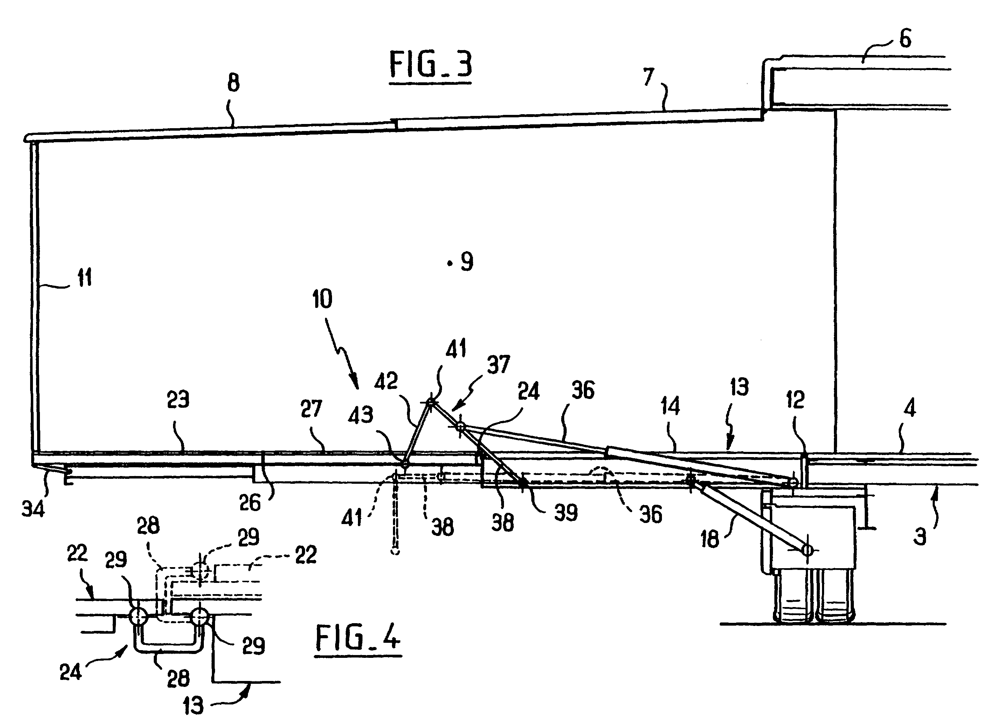

Selon le premier mode de réalisation représenté aux figures 1 à 4, le véhicule routier comporte un châssis 1 supporté par des roues 2. Sur le châssis 1 est fixée une base rigide 3, de forme rectangulaire plane, dont la face supérieure 4 constitue le plancher du véhicule lorsque celui-ci est à l'état replié correspondant à sa configuration de circulation routière. Le véhicule comprend encore un toit permanent 6 aux bords longitudinaux duquel sont articulés des toits mobiles 7. En configuration de circulation (partie droite de la figure 1), les toits mobiles 7 s'étendent verticalement vers le bas à partir du toit 6 pour former les parois latérales du véhicule. Comme le montre la figure 3, les toits mobiles 7 peuvent pivoter vers le haut et vers l'extérieur jusqu'à une position sensiblement horizontale pour agrandir latéralement le toit du véhicule, à partir du toit permanent 6. Un ensemble de rallonges 8 emboîtées dans les toits mobiles 7 permettent d'étendre chaque toit mobile 7 latéralement vers l'extérieur lorsque les toits mobiles 7 sont en position sensiblement horizontale. Par ailleurs, des parois mobiles 9 sont articulées aux parois d'extrémité fixe, avant et arrière, du véhicule, et des parois mobiles 11 sont articulées aux extrémités libres des parois mobiles 9. Chaque ensemble 9, 11 est mobile entre la position de circulation représentée en partie droite de la figure 1 où les parois 9 et 11 s'étendent longitudinalement, repliées l'une contre l'autre, à l'intérieur du véhicule au-dessus de la base 3, et la position d'extension représentée à la figure 3, où les parois 9 prolongent les parois d'extrémité fixes 5 du véhicule et les parois 11 ferment latéralement le véhicule lorsqu'il est en configuration d'utilisation fixe. Le toit mobile 7 et ses rallonges 8 reposent alors sur les bords supérieurs des parois 9 et 11.

A chacun des bords longitudinaux de la base 3 est relié de manière pivotante, par une articulation 12, un ensemble mobile 10. Lorsque le toit mobile 7, 8 est en position horizontale, (partie gauche de la figure 1), l'ensemble mobile 10 peut, d'une manière qui sera décrite en détail ci-après, passer d'un état escamoté représenté dans la partie droite de la figure 1 à un état déployé représenté à la figure 3. A l'état déployé l'ensemble mobile 10 prolonge considérablement la base 3 pour former une plate-forme s'étendant jusqu'au bord inférieur de la paroi latérale 11. Dans cette configuration, le véhicule est utilisable à poste fixe pour constituer un restaurant, une salle de cinéma, etc... Au contraire, l'état escamoté de l'ensemble mobile 10 correspond à la configuration de circulation du véhicule. L'ensemble mobile 10 prend alors place entre le toit mobile 7, du côté extérieur du véhicule, et les parois mobiles 9 et 11, du côté intérieur. Il y a entre les ensembles des parois mobiles 9 et 11 escamotés un volume libre 19 capable de recevoir pendant le transport les tables, chaises et autres accessoires nécessaires à l'activité pour laquelle le véhicule est utilisable en configuration d'utilisation fixe.

L'articulation 12 relie à la base 3 un premier plateau 13 de l'ensemble mobile 10. Lorsque l'ensemble mobile 10 est à l'état escamoté, le premier plateau 13 occupe lui-même une position escamotée (partie droite de la figure 1) dans laquelle il s'étend vers le haut perpendiculairement à la base 3 le long de la face intérieure du toit mobile 7 lorsque celui-ci forme paroi latérale du véhicule en configuration de circulation. A partir de l'état escamoté, l'ensemble mobile 10 peut pivoter d'environ 90° autour de l'articulation 12 jusqu'à ce que le plateau 13 prenne une position déployée dans laquelle sa face supérieure 14 prolonge latéralement et de manière sensiblement coplanaire la face supérieure 4 de la base 3. Les articulations 12 entre la base 3 et chaque premier plateau 13 sont sensiblement situées dans le plan des faces supérieures 4 et 14. La base 3 a une largeur inférieure à celle du véhicule, de sorte que, en configuration de circulation routière,- les deux plateaux 13 et les toits mobiles 7 s'inscrivent dans la largeur normale du véhicule bien qu'ils débordent de la base 3, comme le montre la partie droite de la figure 1.

L'ensemble mobile 10 comprend en outre un deuxième plateau 21 lui-même constitué d'un panneau intermédiaire 22 et d'un panneau distal 23. Le panneau intermédiaire 22 est relié par une articulation 24 avec le premier plateau 13 le long de son bord opposé à l'articulation 12. En outre, le panneau intermédiaire 22 est relié, par une articulation 26 le long de son bord opposé à l'articulation 24, avec le panneau distal 23. L'articulation 24 est située au voisinage du plan de la face supérieure 14 du premier plateau 13 et du plan de la face supérieure 27 du panneau intermédiaire 22. Elle permet ainsi au panneau 22 de pivoter de 180° entre une position rabattue contre la face supérieure 14 du premier plateau 13, et une position déployée dans laquelle les faces supérieures 14 et 27 sont sensiblement coplanaires. Il est difficile de réaliser une charnière unique permettant une course de 180° sans que cette charnière dépasse du côté qui est concave pendant le pivotement. Dans le cas de la liaison entre le premier plateau 13 et le plateau intermédiaire 22, un tel dépassement serait gênant car il formerait une aspérité sur le côté supérieur de la plate-forme à l'état déployé. C'est pourquoi il est préféré que l'articulation 24 soit réalisée sous la forme de deux charnières successives 29 (fig.4) capables d'une rotation de 90° chacune et reliées par une pièce intermédiaire 28. Les deux charnières 29 sont associées l'une au premier plateau 13, l'autre au panneau intermédiaire 22.

Les articulations 24 et 26 permettent au deuxième plateau 21 de prendre une position déployée (Fig.3) dans laquelle les faces supérieures des panneaux 22 et 23 sont dans le même plan que la face supérieure 14 du premier panneau 13 lui-même en position déployée. Cette combinaison d'états correspond à l'état déployé de la plate-forme et plus généralement à la configuration d'utilisation fixe du véhicule.

L'articulation 26 entre le panneau intermédiaire 22 et le panneau distal 23 est sensiblement située dans le plan de la face inférieure de chacun de ces deux panneaux 22, 23 de sorte que le panneau 23 est repliable contre la face inférieure du panneau 22 par une rotation de 180° en sens contraire de celle permettant de rabattre la face supérieure du panneau 22 contre celle 14 du premier plateau 13.

Ainsi, le premier plateau 13, le panneau intermédiaire 22 et le panneau distal 23 sont repliés en accordéon lorsque l'ensemble mobile 10 est à l'état escamoté (partie droite de la figure 1). A la différence des dispositions connues selon le US-A-3234696 et le US-A-3271065, le premier plateau 13, c'est à dire l'élément relié directement à la base 3, se trouve alors le plus à l'extérieur du véhicule, les autres se suivant successivement vers le plan médian du véhicule. Ceci résulte du fait que le repliage du panneau intermédiaire 22 sur le premier plateau 13 s'effectue dans le même sens de rotation que le passage du premier plateau 13 de la position déployée à la position escamotée.

Le second plateau 21 est également replié en accordéon sur le premier plateau 13 lorsque l'ensemble mobile 10 est dans un état intermédiaire dans lequel le premier plateau 13 est en position déployée (partie gauche de la figure 1).

Un actionneur 18, tel qu'un vérin hydraulique, est monté entre la face inférieure du premier plateau 13 et un ancrage solidaire du châssis 1 sous la base 3. L'extension de l'actionneur 18 provoque la montée de l'ensemble mobile 10 de l'état intermédiaire à l'état escamoté. La contraction de l'actionneur 18, régulée par exemple par un freinage approprié du liquide hydraulique, permet de réguler le mouvement contraire. A l'état contracté, l'actionneur 18 permet de régler l'horizontalité du premier plateau 13.

L'ensemble mobile 10 comprend en outre des moyens de soutien escamotables 31 supportés par le premier plateau 13 et guidés relativement au plateau 13 dans un plan sensiblement parallèle à la surface supérieure 14 du premier plateau 13.

Dans l'exemple représenté, les moyens de soutien 31 sont télescopiques. Ils comprennent un premier étage 32 guidé de manière coulissante (voir référence 15 aux Figures 1 et 2) dans le premier plateau 13 en-dessous de la face supérieure 14 selon une direction de coulissement perpendiculaire aux axes des articulations 12, 24 et 26, et un deuxième étage 33 guidé en coulissement selon la même direction relativement au premier étage 32. Les moyens télescopiques sont mobiles entre un état rétracté dans lequel les étages 32 et 33 sont rétractés dans l'épaisseur du premier plateau 13 (fig.1) et un état de totale extension dans lequel ils font saillie latéralement au-delà de l'articulation 24 relativement au plateau 13 (fig.3), en passant par toutes les positions intermédiaires telles que celle visible à la figure 2. Une biellette 34 possède une première extrémité articulée à l'extrémité libre du deuxième étage 33 et une deuxième extrémité articulée au bord libre du panneau distal 23, à l'opposé de l'articulation 26. La biellette 34 réalise ainsi entre le deuxième plateau 21 et les moyens télescopiques 31 un couplage mécanique qui assure une simultanéité entre d'une part le mouvement du deuxième plateau 21 de sa position repliée en accordéon sur le premier plateau 13 à sa position déployée dans le prolongement du plateau 13, et d'autre part le mouvement des moyens télescopiques 31 entre leur état rétracté et leur état de totale extension.

Le mouvement des moyens télescopiques entre l'état rétracté et l'état d'extension est libre, c'est à dire que les moyens télescopiques 31 ne sont pas moteurs. C'est le mouvement du plateau 21 entre ses deux états extrêmes qui commande les mouvements correspondants des moyens télescopiques 31 par l'intermédiaire de la biellette 34.

Dans la situation représentée à la figure 1 où les moyens télescopiques 31 sont rétractés et le deuxième plateau 21 est replié en accordéon sur le premier plateau 13, l'extrémité libre du panneau distal 23 et celle du deuxième étage télescopique 33 coïncident sensiblement avec les bords articulés l'un à l'autre du premier plateau 13 et du panneau intermédiaire 22. La biellette 34 est alors sensiblement perpendiculaire au plan du premier plateau 13 et des panneaux 22 et 23. La longueur de la biellette 34 est calculée pour couvrir la distance entre le panneau distal 23 et le deuxième étage télescopique 33 dans cette position.

Lorsque l'ensemble mobile 10 est à l'état déployé (Fig.3), le panneau intermédiaire 22 et le panneau distal 23 sont soutenus par le premier étage 32 et respectivement le deuxième étage 33 des moyens télescopiques 31, lesquels supportent également les charges susceptibles de s'exercer en utilisation sur lesdits panneaux 22, 23.

Pour mouvoir l'ensemble mobile 10 entre l'état intermédiaire représenté à la partie gauche de la figure 1, et l'état déployé représenté à la figure 3, la plate-forme comprend un second actionneur 36 réalisé sous la forme d'un vérin hydraulique monté entre le premier plateau 13 et un dispositif amplificateur de mouvement angulaire 37. Le dispositif amplificateur 37 comprend un levier 38 ayant une extrémité 39 articulée au premier plateau 13 et une deuxième extrémité 41 qui est reliée au panneau intermédiaire 22 par l'intermédiaire d'une biellette de liaison 42. La distance entre les deux extrémités 39 et 41 du levier 38 est plus grande que la distance entre l'articulation 24 du panneau 22 avec le premier plateau 13 et une articulation 43 de la biellette 42 avec le panneau intermédiaire 22. En conséquence la course angulaire de 180° du panneau intermédiaire 22 par rapport au plateau 13 correspond à une course angulaire plus faible du levier 38. L'actionneur 36 est attelé au levier 38 et peut actionner le levier 38 sur la totalité de sa course angulaire précitée. Pour qu'un tel actionnement soit possible, l'actionneur 36 est positionné pour que son axe longitudinal reste toujours d'un même côté de l'articulation 39 autour de laquelle le levier 38 pivote relativement au premier plateau 13. Un tel positionnement de l'actionneur 36 peut être trouvé car la course angulaire du levier 38 est inférieure à 180°.

Lorsque la plate-forme est à l'état déployé, l'actionneur 36, le levier 38 et la biellette 42 dépassent au-dessus de la plate-forme. Pour remédier à cet inconvénient, on peut par exemple prévoir que l'articulation 39 du levier 38 ou bien, comme représenté en pointillé à la figure 3, l'articulation 43 de la biellette 42, est débrochable pour permettre d'abaisser l'actionneur 36, le levier 38 et la biellette 42 sous la surface supérieure de la plate-forme. En pratique, le premier plateau 13 et le panneau intermédiaire 22 peuvent comporter une fente pour le passage de l'actionneur 36, du levier 38 et de la biellette 42. Une fois ceux-ci escamotés comme il vient d'être dit, la fente peut-être obturée au moyen d'une plaque amovible. Les charnières matérialisant l'articulation 24 sont interrompues à l'emplacement d'une telle fente munie d'une plaque amovible.

Pour un véhicule de grande longueur mesurée perpendiculairement au plan des figures 1 à 4, il est possible de prévoir en parallèle plusieurs actionneurs 18 et respectivement plusieurs ensembles comprenant un actionneur 36 et un amplificateur de mouvement angulaire 37, répartis sur la longueur du véhicule.

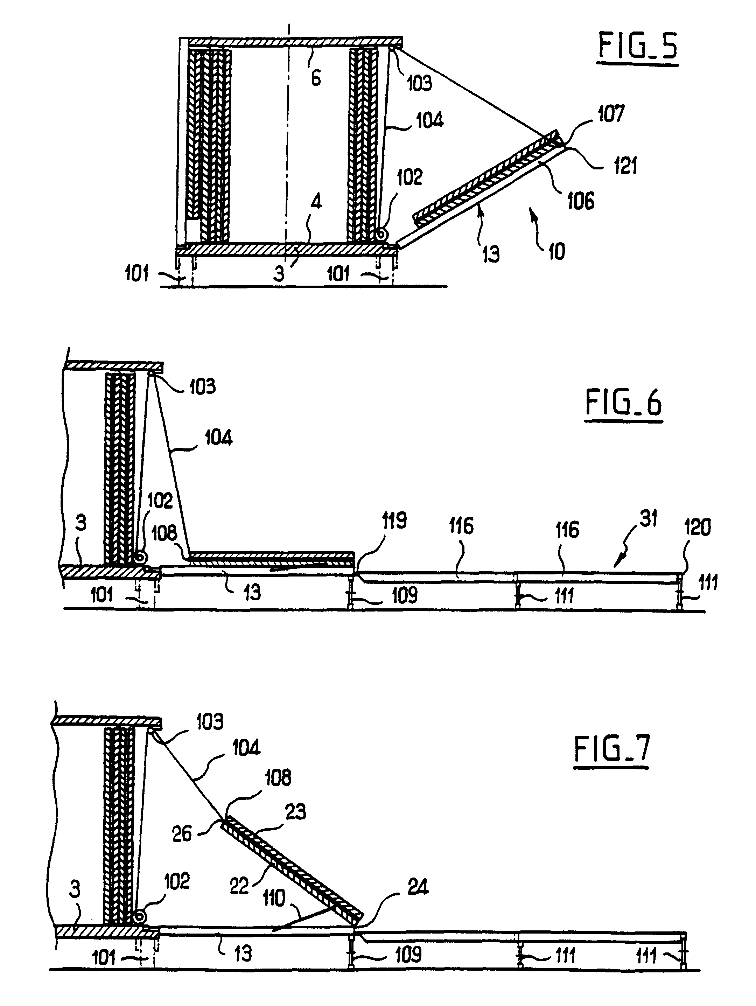

Le mode de réalisation des figures 5 à 10 ne sera décrit que pour ses différences par rapport au précédent.

Un abri véhiculable muni d'une plate-forme repliable selon l'invention, est représenté en vue arrière aux figures.

En position d'utilisation, la base 3 de l'abri véhiculable est posée sur des éléments stabilisateurs 101.

Dans cette variante, les premiers moyens actionneurs qui provoquent la montée et la descente de chaque ensemble mobile 10 ne sont plus des vérins hydrauliques, mais sont constitués de systèmes à treuil 102, câble 104 et poulie de renvoi 103 destinés à être manoeuvrés manuellement. Il y a par exemple, pour chaque ensemble mobile 10, untel système à chaque extrémité de l'abri.

Sur la partie gauche de la figure 5 est représenté un ensemble mobile 10 en position escamotée. Sur la partie droite de la figure 5 est représenté un ensemble mobile 10 en cours de passage entre sa position escamotée et sa positon intermédiaire.

Chaque treuil 102 est positionné sur le plancher 4 formé par la face supérieure de la base 3 de l'abri. Une poulie de renvoi 103 lui est associée, fixée à la face inférieure du toit permanent 6, à la verticale du treuil 102.

Un lien souple de manutention 104, issu du treuil 102, passe par la poulie 103. Son extrémité est destinée à être accrochée de manière amovible au premier plateau 13 en un point 107 voisin de son articulation 24 avec le panneau intermédiaire 22 (figure 5).

Chaque mouvement de descente de l'ensemble mobile 10 s'effectue en deux temps. On suppose pour simplifier qu'il n'est prévu qu'un seul ensemble à treuil 102, poulie 103 et lien 104, étant entendu que le ou les éventuel(s) tel(s) autre(s) ensemble(s) sont manoeuvrés identiquement et simultanément.

Dans un premier temps, le treuil 102 est manoeuvré de manière à dévider du lien 104, de sorte que l'ensemble mobile 10 est abaissé à la manière d'un pont-levis, jusqu'à sa position intermédiaire dans laquelle il est sensiblement horizontal et parallèle à la base 3 de l'abri. Une fois qu'il a atteint cette position intermédiaire, l'ensemble mobile 10 est stabilisé par des supports 109 prévus à cet effet (voir figure 6) sous le premier plateau 13 au voisinage de l'articulation 24 entre celui-ci et le panneau intermédiaire 22.

Dans un deuxième temps, après installation des moyens de soutien 31 qui seront décrits en détail plus loin, l'extrémité du lien de manutention 104 est décrochée de 107 pour être accrochée en 108 près de l'articulation 26 entre le panneau intermédiaire 22 et le panneau distal 23 (voir figure 6). Puis le treuil 102, servant maintenant de moyens d'actionnement du deuxième plateau, est manoeuvré pour rembobiner le lien 104, de façon à tendre celui-ci (figure 6) puis soulever l'articulation 26 reliant le panneau intermédiaire 22 et le panneau distal 23 (figure 7).

Des vérins compensateurs 110, par exemple à ressort ou à gaz, facilitent cette opération. Ces vérins compensateurs 110 sont articulés par une extrémité au premier plateau 13 et par l'autre extrémité au panneau intermédiaire 22, ces deux articulations étant distantes de l'articulation 24 entre le plateau 13 et le panneau 22. La force des vérins 110 est suffisante pour soulever les panneaux 22 et 23 au plus tard lorsque ceux-ci ont atteint la position de plus courte longueur dévidée du lien 104 (sensiblement la position de la figure 7). Le mouvement continue sous l'action des vérins 110, le lien 104 se dévidant à nouveau.

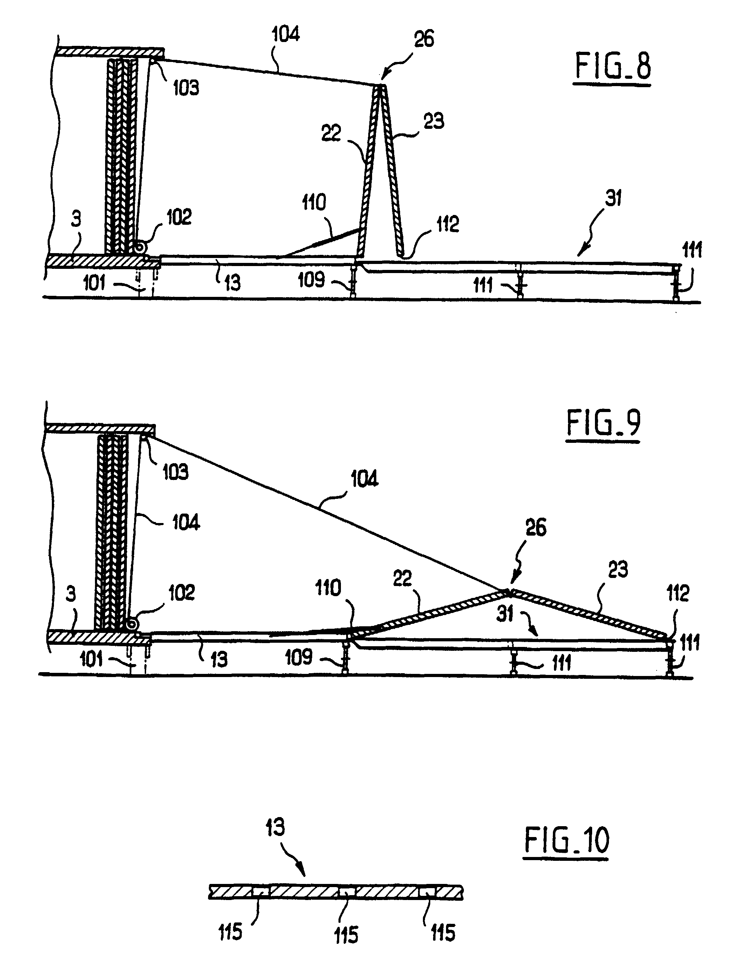

Lorsque le panneau intermédiaire 22 et le panneau distal 23 sont amenés en positon sensiblement verticale (figure 8), le lien de manutention 104 continue d'être dévidé au moyen du treuil 102 jusqu'à ce que le bord libre 112 du panneau distal 23 vienne reposer sur les moyens de soutien 31 (voir figures 8 et 9).

La séparation entre les faces en contact du panneau intermédiaire 22 et du panneau distal 23 est réalisée manuellement par l'un des opérateurs, qui aide ainsi au démarrage du glissement du bord 112 sur les moyens de soutien 31.

Lorsque le panneau intermédiaire 22 et le panneau distal 23 viennent reposer complètement sur les moyens de soutien 31 sensiblement dans le plan de la base 3 et du premier plateau 13, les vérins compensateurs 110 sont également alignés dans ce plan. La descente de l'ensemble mobile 10 est alors terminée. Les liens de manutention 104 sont décrochés et rembobinés.

L'escamotage de l'ensemble mobile 10 s'effectue par des opérations inverses de celles qui viennent d'être décrites. A partir de la position de la figure 7, le poids des panneaux 22 et 23 suffit à vaincre les vérins 110.

Selon le mode de réalisation illustré aux figures 5 à 10, les moyens de soutien comprennent un cadre que l'on fait reposer d'une part sur le bord 119, convenablement aménagé, du premier plateau 13 le long de l'articulation 24 avec le panneau intermédiaire 22 et d'autre part sur le sol par l'intermédiaire de béquilles réglables 111 placées à distance de l'articulation 24. Le cadre est constitué de traverses 116 que l'on assemble pour former le cadre une fois que l'ensemble mobile 10 a atteint la position basse représentée à la figure 6. Le cadre est démontable. Pendant la circulation ou le transport de l'abri, les traverses 116 sont rangées à l'intérieur de logements 115 ménagés dans l'épaisseur du premier plateau 13 (voir figure 10), parallèles à la face supérieure 14 dudit plateau 13, adjacente à l'articulation 24.

Bien entendu, l'invention n'est pas limitée aux exemples décrits et représentés :

Le premier plateau pourrait être réalisé en deux parties articulées l'un par rapport à l'autre, les moyens de soutien du deuxième plateau étant eux-mêmes supportés par la partie du premier plateau qui est la plus éloignée de la base. Le deuxième plateau 21 pourrait ne comporter qu'un seul panneau, ou au contraire plus de deux panneaux, par exemple quatre panneaux repliables en accordéon. Le deuxième actionneur de la réalisation des figures 1 à 4 pourrait agir sur les moyens de soutien, tels que 31, pour qu'ils entraînent le deuxième plateau tel que 21 entre ses positions repliée et déployée. Il est également concevable de prévoir des moyens d'actionnement séparés pour les moyens de soutien et pour le deuxième plateau. On peut aussi supprimer les seconds moyens actionneurs tels que 36 et les remplacer par un couplage mécanique synchronisant les mouvements du premier plateau 13 et du deuxième plateau 21.

Les moyens pour soutenir le premier plateau dans le plan de la base peuvent comprendre des béquilles d'appui du premier plateau sur le sol; une ou plusieurs barres de triangulation que l'on met en place entre la face inférieure du premier plateau en position déployée et le châssis, ces barres prenant une position analogue à celle du vérin 18; et/ou des moyens de rigidification tels que télescopiques s'engageant de la base dans le premier plateau ou du premier plateau dans la base lorsque le premier plateau est en position déployée.

Le premier mode de réalisation n'exclut pas l'utilisation de béquilles de stabilisation sous le deuxième plateau. Plus généralement, il est envisagé que des béquilles d'appui en nombre relativement grand (plusieurs dizaines de chaque côté du véhicule) soient suspendues de manière articulée aux faces inférieures du plateau 13 et des panneaux 22 et 23 pour se rabattre automatiquement contre ceux-ci, par gravité, quand ces panneaux et plateaux sont en position verticale, et se mettre en position d'appui sur le sol, toujours par gravité, lorsque la plate-forme passe à l'état déployé. On peut ensuite régler l'horizontalité en réglant la longueur de ces béquilles, équipées à cet effet de moyens de réglage appropriés.

L'axe 39 ou 43, au lieu d'être débrochable, pourrait être monté sur un chariot mobile dans le sens de la largeur de la plate-forme pour sélectivement abaisser l'ensemble 36, 38 et 42 sous la surface supérieure de la plate-forme en éloignant ces deux axes 39 et 43 l'un de l'autre.

Dans le deuxième mode de réalisation, les moyens d'actionnement pourraient être distincts pour le premier et pour le deuxième plateau.

## Revendications

1. Plate-forme repliable comprenant une base (3) disposée sensiblement horizontalement en service; au moins un ensemble mobile (10) comprenant un premier plateau (13) relié à la base (3) par une articulation (12) et un deuxième plateau (21) relié de manière mobile au premier plateau, l'ensemble mobile pouvant par l'articulation (12) du premier plateau (13) avec la base (3) et par mouvement relatif des deux plateaux, se transformer entre un état escamoté, et un état déployé dans lequel le premier et le deuxième plateau sont alignés avec la base; et des moyens de soutien (31) pour soutenir le deuxième plateau (21) dans le plan de la base (3) lorsque l'ensemble mobile (10) est à l'état déployé, caractérisée en ce le premier plateau (13) comprend des moyens (15, 119) pour, sensiblement indépendamment de la base (3), supporter les moyens de soutien (31) dans une position de soutien dans laquelle les moyens de soutien (31) sont positionnés sensiblement parallèlement au plan du premier plateau (13) et sont capables de soutenir le deuxième plateau en une position déployée de celui-ci.

2. Plate-forme repliable selon la revendication 1, caractérisée en ce que le deuxième plateau (21) est articulé au premier plateau (13) et en ce que lors des mouvements de l'ensemble mobile (10) entre les états escamoté et déployé, le premier plateau (13) pivote par rapport à la base (3) dans le même sens que le deuxième plateau (21) par rapport au premier plateau (13).

3. Plate-forme repliable selon la revendication 1 ou 2, caractérisée en ce que le deuxième plateau (21) comprend un panneau intermédiaire (22) et un panneau distal (23), le panneau intermédiaire (22) ayant un bord articulé au premier plateau (13) et un bord articulé au panneau distal (23).

4. Plate-forme repliable selon la revendication 3, caractérisée en ce que, lors des mouvements du deuxième plateau (21) entre les positions repliée et déployée, -le panneau distal (23) pivote par rapport au panneau intermédiaire (22) dans un sens opposé à celui dans lequel le panneau intermédiaire (22) pivote par rapport au premier plateau (13).

5. Plate-forme repliable selon la revendication 3 ou 4, caractérisée en ce que les moyens de soutien (32, 33) sont guidés relativement au premier plateau (13) pour se déplacer entre une position escamotée et ladite position de soutien, et en ce qu'il est prévu entre les moyens de soutien (32, 33) et le panneau distal (23) un couplage mécanique (34) par lequel le mouvement du deuxième plateau entre la position déployée et une position repliée contre le premier plateau (13), et le mouvement des moyens de soutien entre le position de soutien et la position escamotée, sont simultanés.

6. Plate-forme selon l'une des revendications 1 à 4, caractérisée en ce que les moyens de soutien (31) comprennent une structure (116) conçue pour être installée en appui sur le premier plateau (13) et sur le sol une fois le premier plateau (13) placé en alignement avec la base (3).

7. Plate-forme repliable selon l'une des revendications 1 à 4, caractérisée en ce que les moyens de soutien (32, 33) sont guidés relativement au premier plateau (13) pour se déplacer sensiblement parallèlement au plan du premier plateau (13) entre une position escamotée et ladite position de soutien.

8. Plate-forme repliable selon la revendication 7, caractérisée en ce que les moyens de soutien (32, 33) sont guidés pour un mouvement télescopique relativement au premier plateau (13).

9. Plate-forme repliable selon la revendication 7 ou 8, caractérisée en ce qu'il est prévu entre les moyens de soutien (32, 33) et le deuxième plateau (21) un couplage mécanique (34) par lequel le mouvement du deuxième plateau entre la position déployée et une position repliée contre le premier plateau (13), et le mouvement des moyens de soutien entre la position de soutien et la position escamotée, sont simultanés.

10. Plate-forme selon la revendication 5 ou 9, caractérisée en ce que les moyens de soutien (32, 33) sont librement mobiles relativement au premier plateau (13), de manière à être entraînés par le deuxième plateau (21) via le couplage mécanique (34).

11. Plate-forme repliable selon la revendication 5, 9 ou 10, caractérisée en ce que le couplage mécanique (34) comprend une biellette articulée aux moyens de soutien et au deuxième plateau (21).

12. Plate-forme repliable selon l'une des revendications 1 à 11, caractérisée en ce qu'elle comprend des premiers moyens actionneurs (18) montés fonctionnellement entre la base (3) et le premier plateau (13) pour mouvoir l'ensemble mobile (10) entre l'état escamoté et un état intermédiaire où le premier plateau (13) est dans le plan de la base (3) et le deuxième plateau (21) est dans un état rétracté relativement au premier plateau (13), et des seconds moyens moteurs (36) montés fonctionnellement entre les premier (13) et deuxième (21) plateaux pour mouvoir l'ensemble mobile (10) entre l'état intermédiaire et l'état déployé.

13. Unité mobile telle que véhicule terrestre ou abri véhiculable comprenant une plate-forme repliable selon l'une des revendications 1 à 12, caractérisée en ce qu'à l'état escamoté l'ensemble mobile (10) s'étend sensiblement perpendiculairement à la base (3) le long d'un flanc de l'unité mobile.

14. Unité mobile selon la revendication 13, caractérisé en ce que la base (3) est plus étroite que l'unité mobile.

15. Unité mobile telle que véhicule terrestre ou abri véhiculable selon l'une des revendications 13 à 14, caractérisée en ce qu'elle comprend deux ensembles mobiles (10) articulés chacun à l'un des deux bords longitudinaux opposés de la base (3), laquelle forme plancher pour l'unité mobile en configuration de circulation.

## Patentansprüche

1. Zusammenlegbare Plattform, umfassend eine in Betrieb etwa horizontal angeordnete Basis (3); wenigstens eine bewegbare Anordnung (10), die eine mit der Basis (3) über ein Gelenk (12) verbundene erste Platte (13) und eine in bewegbarer Weise mit der ersten Platte verbundene zweite Platte (21) aufweist, wobei die bewegbare Anordnung durch die Gelenkverbindung (12) der ersten Platte (13) mit der Basis (3) und durch eine Bewegung der beiden Platten relativ zueinander zwischen einem zusammengelegten Zustand und einem ausgestreckten Zustand, in dem die erste und die zweite Platte mit der Basis ausgerichtet sind, überführt werden kann; und Stützmittel (31) um die zweite Platte (21) in der Ebene der Basis (3) zu stützen, während die bewegbare Anordung (10) im ausgestreckten Zustand ist,
**dadurch gekennzeichnet, daß** die erste Platte (13) Mittel (15, 119) umfaßt, um die Stützmittel (31) in wesentlichen unabhängig von der Basis (3) in einer Stützstellung abzustützen, in der die Stützmittel (31) in etwa parallel zu Ebene der ersten Platte (13) angeordnet sind und fähig sind, die zweite Platte in einer ausgestreckten Stellung derselben zu stützen.

2. Zusammenlegbare Plattform nach Anspruch 1,
**dadurch gekennzeichnet, daß** die zweite Platte (21) mit der ersten Platte (13) gelenkig verbunden ist, und daß während der Bewegung der bewegbaren Anordnung (10) zwischen dem zusammengelegten und dem ausgestreckten Zustand die erste Platte (13) bezüglich der Basis (3) in der gleichen Richtung wie die zweite Platte (21) bezüglich der ersten Platte (13) ausschwenkt.

3. Zusammenlegbare Plattform nach Anspruch 1 oder 2,
**dadurch gekennzeichnet, daß** die zweite Platte (21) eine zwischenliegende Tafel (22) und eine distale Tafel (23) umfaßt, wobei die zwischenliegende Tafel (22) einen an die erste Platte (13) angelenkten Rand und einen an die distale Tafel (23) angelenkten Rand aufweist.

4. Zusammenlegbare Plattform nach Anspruch 3,
**dadurch gekennzeichnet,** daß während der Bewegungen der zweiten Platte (21) zwischen der zusammengelegten und ausgestreckten Stellung die distale Tafel (23) bezüglich der zwischenliegenden Tafel (22) in einer zur Richtung in der die zwischenliegende Tafel (22) bezüglich der ersten Platte (13) ausschwenkt umgekehrten Richtung ausschwenkt.

5. Zusammenlegbare Plattform nach Anspruch 3 oder 4,
dadurch gekennzeichnet, daß die Stützmittel (32, 33) relativ zur ersten Platte (13) geführt sind um zwischen einer eingezogenen Stellung und der genannten Stützstellung versetzt zu werden, und daß zwischen den Stützmitteln (32, 33) und der distalen Tafel (23) eine mechanische Kopplung (34) vorgesehen ist, durch welche die Bewegung der zweiten Platte zwischen der ausgestreckten Stellung und einer gegen die erste Platte (13) zurückgezogenen Stellung und die Bewegung der Stützmittel zwischen der Stützstellung und der eingezogenen Stellung gleichzeitig erfolgen.

6. Plattform nach einem der Ansprüche 1 bis 4,
**dadurch gekennzeichnet, daß** die Stützmittel (31) eine Struktur (116) aufweisen, die so ausgelegt ist, daß sie zur Abstützung auf der ersten Platte (13) und auf dem Boden angebracht ist, wenn die erste Platte (13) erst einmal in Ausrichtung mit der Basis (3) angeordnet ist.

7. Zusammenlegbare Plattform nach einem der Ansprüche 1 bis 4,
**dadurch gekennzeichnet, daß** die Stützmittel (32, 33) relativ zur ersten Platte (13) geführt werden, um in etwa parallel zur Ebene der ersten Platte (13) zwischen einer eingezogenen Stellung und der genannten Stützstellung versetzt zu werden.

8. Zusammenlegbare Plattform nach Anspruch 7,
**dadurch gekennzeichnet, daß** die Stützmittel (32, 33) für eine teleskopische Bewegung relativ zur ersten Platte (13) geführt sind

9. Zusammenlegbare Plattform nach Anspruch 7 oder 8,
**dadurch gekennzeichnet, daß** zwischen den Stützmitteln (32, 33) und der zweiten Platte (21) eine mechanische Kopplung (34) vorgesehen ist, durch welche die Bewegung der zweiten Platte zwischen der ausgestreckten Stellung und einer gegen die erste Platte (13) zurückgezogenen Stellung und die Bewegung der Stützmittel zwischen der Stützstellung und der eingezogenen Stellung gleichzeitig erfolgen.

10. Plattform nach Anspruch 5 oder 9,
**dadurch gekennzeichnet, daß** die Stützmittel (32, 33) relativ zur ersten Platte (13) frei bewegbar sind, um durch die zweite Platte (21) über die mechanische Kopplung (34) mitgenommen zu werden.

11. Zusammenlegbare Plattform nach Anspruch 5, 9 oder 10,
**dadurch gekennzeichnet, daß** die mechanische Kopplung (34) eine Anlenkstange aufweist, die an die Stützmittel und an die zweite Platte (21) angelenkt ist.

12. Zusammenlegbare Plattform nach einem der Ansprüche 1 bis 11,
**dadurch gekennzeichnet, daß** sie erste Betätigungsmittel (18), die in Ergebnis zwischen der Basis (3) und der ersten Platte (13) angebracht sind, um die bewegbare Anordnung (10) zwischen dem eingezogenen Zustand und einem Zwischenzustand zu bewegen, bei dem die erste Platte (13) in der Ebene der Basis (3) liegt und sich die zweite Platte (21) in einem relativ zur ersten Platte (13) zurückgezogenen Zustand befindet, und zweite Motormittel (36), die in Ergebnis zwischen der ersten (13) und zweiten (21) Platte angebracht sind, um die bewegbare Anordnung (10) zwischen dem Zwischenzustand und dem ausgestreckten Zustand zu bewegen, aufweist.

13. Bewegbare Einheit, wie erdgebundenes Fahrzeug oder mitführbarer Schutzstand, die eine zusammenlegbare Plattform nach einem der Ansprüche 1 bis 12, aufweist,
**dadurch gekennzeichnet, daß** 7die bewegbare Anordnung (10) im zurückgezogenen Zustand etwa senkrecht zur Basis (3) längs einer Seitenfläche der bewegbaren Einheit verläuft.

14. Bewegbare Einheit nach Anspruch 13,
**dadurch gekennzeichnet, daß** die Basis (3) schmaler ist als die bewegbare Einheit.

15. Bewegbare Einheit, wie erdgebundenes Fahrzeug oder mitfiihrbarer Schutzstand, nach einem der Ansprüche 13 bis 14,
**dadurch gekennzeichnet, daß** sie zwei bewegbare Anordnungen (10) aufweist, die jeweils an einem der beiden gegenüberliegenden Längsränder der Basis (3) angelenkt sind, welche den Boden für die bewegbare Einheit in der Verkehrskonfiguration bildet.

## Claims

1. A folding platform comprising a base (3) arranged substantially horizontally in operation; at least one movable assembly (10) comprising a first stage (13) connected to the base (3) by an articulation (12), and a second stage (21) movably connected to the first stage, the movable assembly being able by the articulation (12) of the first stage (13) with the base (3), and by relative movement of the two stages to perform transformation between a folded state and an opened out state in which the first and the second stages are brought into alignment with the base; and support means (31) to support the second stage (21) in the plane of the base (3), when the movable assembly (10) is in the opened out state, characterised in that the first stage (13) comprises means (15,119) to hold up the support means (31) substantially independently from the base (3) in a position of support, in which the support means (31) are positioned substantially parallel to the plane of the first stage (13), and are capable of supporting the second stage in its opened out position.

2. A foldable platform according to claim 1, characterised in that the second stage (21) is articulated to the first stage (13) and in that during the movements of the movable assembly (10) between the folded and opened out states, the first stage (13) pivots in relation to the base (3), in the same direction as the second stage (21) in relation to the first stage (13).

3. A folding platform according to claim 1 or 2, characterised in that the second stage (21) comprises an intermediate panel (22) and a distal panel (23), the intermediate panel (22) having an edge articulated to the first stage (13), and an edge articulated to the distal panel (23).

4. A folding platform according to claim 3, characterised in that during the movements of the second stage (21) between the folded and opened out positions, the distal panel (23) pivots in relation to the intermediate panel (22), in an opposite direction to that in which the intermediate panel (22) pivots in relation to the first stage (13).

5. A foldable platform according to claim 3 or 4, characterised in that the support means (32,33) are guided relative to the first stage (13) to move between a retracted position and said position of support, and in that there is provided between the support means (32,33) and the distal panel (23) a mechanical coupling (34), by which the movement of the second stage between the opened out position and a position folded against the first stage (13), and the movement of the support means between the position of support and the retracted position are simultaneous.

6. A platform according to one of claims 1 to 4, characterised in that the support means (31) include a structure (116), adapted to be installed to bear onto the first stage (13) and onto the ground once the first stage (13) is placed in alignment with the base (3).

7. A foldable platform according to one of claims 1 to 4, characterised in that the support means (32,33) are guided relative to the first stage (13), for displacement substantially parallel to the plane of the first stage (13) between a retracted position and said position of support.

8. A foldable platform according to claim 7, characterised in that the support means (32,33) are guided for a telescopic movement relative to the first stage (13).

9. A foldable platform according to claim 7 or 8, characterised in that a mechanical coupling (34) is provided between the support means (32,33) and the second stage (21), by which the movement of the second stage between the opened out position and a folded position against the first stage (13), and the movement of the means of support means between the position of support and the retracted position, are simultaneous.

10. A platform according to claim 5 or 9, characterised in that the support means (32,33) are freely movable relative to the first stage (13), in such a way as to be driven by the second stage (21) via the mechanical coupling (34).

11. A foldable platform according to claim 5,9 or 10, characterised in that the mechanical coupling (34) consists of a linking rod articulated to the support means and to the second stage (21).

12. A foldable platform according to one of claims 1 to 11, characterised by comprising first actuator means (18) mounted operatively between the base (3) and the first stage (13) to move the movable assembly (10) between the folded state and an intermediate state where the first stage (13) is in the plane of the base (3), and the second stage (21) is in a retracted state relative to the first stage (13), and second motorised means (36) mounted operatively between the first (13) and second (21) stages to move the movable assembly (10) between the intermediate state and the opened out state.

13. A mobile unit such as a land vehicle or mobile shelter comprising a foldable platform according to any of claims 1 to 12, characterised in that in the folded state the movable assembly (10) extends substantially perpendicularly to the base (3) along a flank of the mobile unit.

14. A mobile unit according to claim 13, characterised in that the base (3) is narrower than the mobile unit.

15. A mobile unit such as a land vehicle or mobile shelter according to any of claims 13 to 14, characterised by comprising two movable assemblies (10) each one articulated to one of the two opposed longitudinal edges of the base (3) which forms a floor for the mobile unit in traffic configuration.
